# EUROPEAN PATENT APPLICATION

(11) **EP 2 017 781 A1**
(43) Date of publication of application: **21.01.2009**
(21) Application number: 08153617.9
(22) Date of filing: 28.03.2008
(51) Int. Cl.: G06Q 30/00

(54) **Method for providing stock information and broadcast receiving apparatus using the same**

(30) Priority: 16.07.2007 KR 20070071312
(71) Applicant: Samsung Electronics Co., Ltd., Suwon-si, Gyeonggi-do 442-742 (KR)
(72) Inventor: Joo, Jae-il 1006-1201, Bangjuk-maeul, Yeongtong-gu, Suwon-si Gyeonggi-do (KR)
(74) Representative: Brandon, Paul Laurence

(57) **Abstract**

A method for providing stock information and a broadcast receiving apparatus using the method are provided. According to the method for providing stock information, stock information is received according to the RSS protocol, and the received information is displayed as display information on a display of the broadcast receiving apparatus.

## Description

### BACKGROUND OF THE INVENTION

### 1. Field of the Invention

Apparatuses and methods consistent with the present invention relate to providing stock information, and more particularly, to receiving information on stock markets from an external source and providing the received information to a user.

### 2. Description of the Related Art

Televisions (TVs) are the most widely used broadcast receiving apparatuses, and, as they are among the most familiar electronic apparatuses to customers and as they have wide displays. TVs are suitable for providing users with useful information.

Accordingly, there are many attempts to provide users with useful information via TVs, in addition to broadcast programs.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

An exemplary embodiment provides a method for providing stock information and a broadcast receiving apparatus using the same, in which stock information is received according to a Really Simple Syndication (RSS) protocol and the received information is provided via a broadcast receiving apparatus such as a TV to a user so that the user can obtain useful information.

An exemplary embodiment also provides a method for providing stock information and a video apparatus using the same which can provide a user with composite stock market information using stock information.

An exemplary embodiment further provides a method for providing stock information and a video apparatus using the same which can provide a stock list together with indices of the stock list.

An exemplary embodiment still further provides a method for providing stock information and a video apparatus using the same in which the display frequency of stock information differs according to the stock markets when received stock information is provided to a user.

According to an aspect of the present invention, there is provided a method for providing stock information, the method comprising receiving stock information using a RSS protocol; and generating display information based on the received stock information.

The receiving and generating may be performed by a broadcast receiving apparatus, which receives a broadcast and provides a user with the received broadcast.

A medium by which the broadcast receiving apparatus receives the broadcast may differ from a medium by which the broadcast receiving apparatus receives the stock information.

The receiving may comprise the broadcast receiving apparatus receiving the stock information via the Internet. The broadcast receiving apparatus may function as a web client with respect to a web server which provides the stock information.

The stock information may comprise composite stock market information. The generating may comprise generating display information including the composite stock market information.

The composite stock market information may correspond to a plurality of stock markets. The generated display information may comprise information to display the composite stock market information, corresponding to the plurality of stock markets, alternately or simultaneously.

The stock information may comprise a list of stocks. The generating may comprise arranging the list alphabetically according to the names of the stocks in the list, and generating display information including the arranged list and indices of the arranged list.

The method may further comprise, if one of the indices contained in the display information is selected, generating display information showing a list in which stocks within the selected index are arranged.

The generating may comprise generating display information using the received stock information, so that the display frequency of information on a predetermined stock may be different from the display frequency of information on other stocks.

The predetermined stock may be a stock previously selected by the user.

The display frequency for the information on the predetermined stock may be adjustable by the user.

According to another aspect of the present invention, there is provided a broadcast receiving apparatus comprising a communication interface which receives stock information using an RSS protocol; and a controller which controls display information to be generated using the stock information received by the communication interface.

The communication interface may receive the stock information via the Internet, and the controller may function as a web client with respect to a web server which provides the stock information.

The stock information may comprise composite stock market information. The controller may cause display information including the composite stock market information to be generated.

The composite stock market information may correspond to a plurality of stock markets. The display information may includes information to display the composite stock market information, corresponding to the plurality of stock markets, alternately or simultaneously.

The stock information may comprise a list of stocks. The controller may arrange the list alphabetically according to the names of the stocks in the list, and cause display information including the arranged list and indices of the arranged list to be generated.

If one of the indices contained in the display information is selected, the controller may cause display information showing a list in which stocks within the selected index are arranged to be generated.

The controller may control display information to be generated using the received stock information, so that a display frequency of information on a predetermined stock may be different from a display frequency of information on other stocks.

The predetermined stock may be a stock previously selected by the user.

The display frequency for the information on the predetermined stock may be adjustable by the user.

According to another aspect of the present invention, there is provided a program capable of performing receiving stock information using a RSS protocol, and generating display information based on the received stock information.

According to another aspect of the present invention, there is provided a method for providing stock information, the method comprising receiving composite stock market information, and generating display information including the received composite stock market information.

According to another aspect of the present invention, there is provided a method for providing stock information, the method comprising receiving a list of stocks; arranging the list alphabetically according to the names of the stocks in the list; and generating display information including the arranged list and indices of the arranged list.

According to another aspect of the present invention, there is provided a method for providing stock information, the method comprising receiving stock information; and generating display information using the received stock information, so that a display frequency of information on a predetermined stock may be different from a display frequency of information on other stocks.

### BRIEF DESCRIPTION OF THE DRAWINGS

The present invention will be more apparent by describing certain exemplary embodiments of the present invention with reference to the accompanying drawings, in which:

FIG. 1 is a diagram showing a stock information providing system to which the present invention is applicable;

FIG. 2 is a detailed block diagram showing a digital television (DTV) shown in FIG. 1;

FIG. 3 is a flowchart explaining a method for providing stock information, in which a stock list is provided together with indices of the stock list, according to an exemplary embodiment of the present invention;

FIG. 4 is a diagram showing an example of a Graphical User Interface (GUI) shown on a screen in operation S380 of FIG. 3;

FIG. 5 is a flowchart explaining a method for providing favorite stock information, according to another exemplary embodiment of the present invention;

FIG. 6 is a diagram showing an example of a GUI shown on a screen in operation S560 of FIG. 5;

FIGS. 7A to 7C are diagrams showing another examples of the GUI shown on the screen in operation S560 of FIG. 5;

FIG. 8 is a flowchart explaining a method for providing favorite stock information, in which the display frequency is adjusted, according to another exemplary embodiment of the present invention;

FIG. 9 is a flowchart explaining a method for providing news regarding favorite stocks together with information regarding the favorite stocks, according to another exemplary embodiment of the present invention;

FIG. 10 is a diagram showing an example of a GUI shown on a screen in operation S950 of FIG. 9;

FIG. 11 is a flowchart explaining a method for providing composite stock market information, according to another exemplary embodiment of the present invention;

FIG. 12A is a diagram showing a GUI which presents Korea Composite Stock Price Index (KOSPI) information;

FIG. 12B is a diagram showing a GUI which presents Korea Securities Dealers Automated Quotations (KOSDAQ) information;

FIG. 13 is a block diagram showing a broadcast receiving apparatus according to another exemplary embodiment of the present invention;

FIG. 14 is a flowchart explaining a method for providing stock information according to another exemplary embodiment of the present invention;

FIG. 15 is a flowchart explaining a method for providing stock information according to another exemplary embodiment of the present invention;

FIG. 16 is a flowchart explaining a method for providing stock information according to another exemplary embodiment of the present invention; and

FIG. 17 is a flowchart explaining a method for providing stock information according to another exemplary embodiment of the present invention.

### DETAILED DESCRIPTION OF EXEMPLARY EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

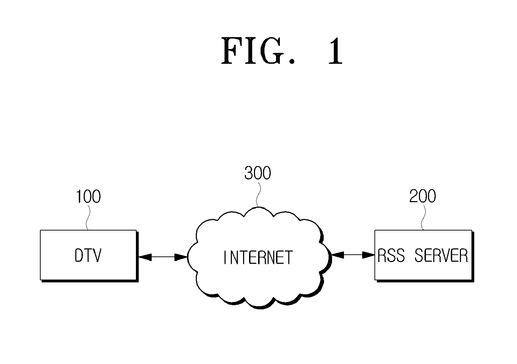

FIG. 1 is a diagram showing a stock information providing system to which the present invention is applicable. The stock information providing system of FIG. 1 is configured by connecting a DTV 100 and an RSS server 200 via the Internet 300 to enable mutual communication.

The DTV 100 is a kind of broadcast receiving apparatus which receives broadcast programs and provides a user with the received broadcast programs. The DTV 100 requests and receives stock information from the RSS server 200 via the Internet 300. Here, the request and receipt of stock information may follow the RSS protocol. Additionally, the DTV 100 provides the user with the received stock information using a screen, for example. The DTV 100 may receive the stock information periodically or non-periodically.

Since the DTV 100 requests the stock information from the RSS server 200 via the Internet 300, the DTV 100 may function as a web client. Alternatively, as the RSS server 200 sends the stock information to the DTV 100 via the Internet 300, the RSS server 200 may function as a web server.

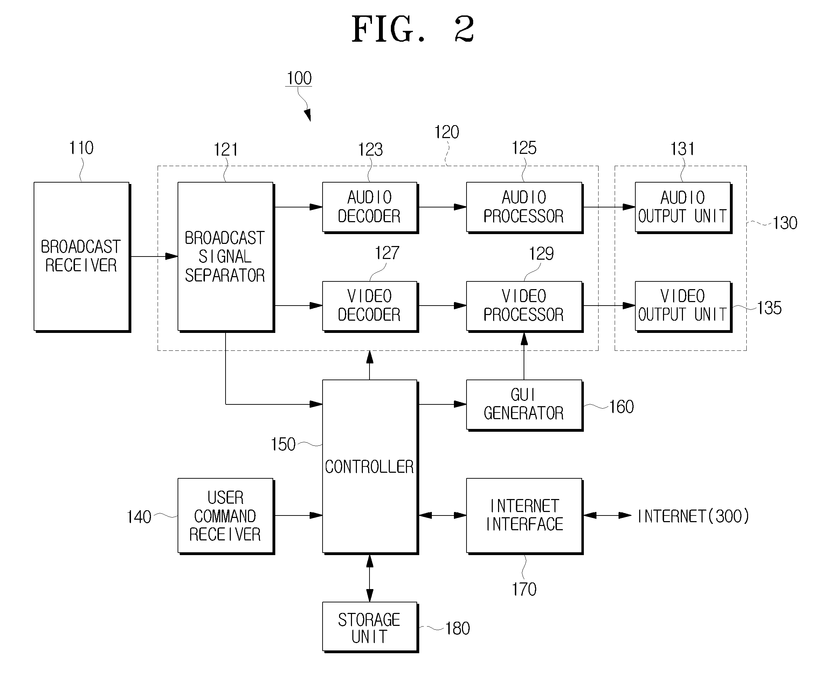

Hereinafter, the DTV 100 of FIG. 1 will be described in detail with reference to FIG. 2. FIG. 2 is a detailed block diagram showing the DTV 100 shown in FIG. 1.

In FIG. 2, the DTV 100 comprises a broadcast receiver 110, a broadcast processor 120, a broadcast output unit 130, a user command receiver 140, a controller 150, a GUI generator 160, an Internet interface 170 and a storage unit 180.

The broadcast signal receiver 110 tunes to one of broadcasts received wirelessly by radio, and demodulates the tuned broadcast.

The broadcast processor 120 performs signal processing with respect to the broadcast signal output from the broadcast signal receiver 110. The broadcast processor 120 comprises a broadcast signal separator 121, an audio decoder 123, an audio processor 125, a video decoder 127 and a video processor 129.

The broadcast signal separator 121 separates the broadcast signal output from the broadcast signal receiver 110 into a video signal, an audio signal and additional data, and outputs the separated signals and data. The audio signal and the video signal separated from the broadcast signal are transferred to the audio decoder 123 and the video decoder 127, respectively, to be used in providing a digital broadcast program.

The additional data separated from the broadcast signal is transferred to the controller 150. The additional data may be program and system information protocol (PSIP) information.

The audio decoder 123 decodes the audio signal output from the broadcast signal separator 121, and may output the decoded audio signal.

The audio processor 125 converts the decoded audio signal output from the audio decoder 123 into an audio signal of a format suitable to be played through a speaker (not shown) of the DTV 100.

The video decoder 127 decodes the video signal output from the broadcast signal separator 121, so that the decoded video signal can be output.

The video processor 129 converts the decoded video signal output from the video decoder 127 into a video signal of a format suitable to be displayed on a display (not shown) of the DTV 100. For achieving this, the video processor 129 performs color signal processing and scaling with respect to the decoded video signal.

The GUI generator 160 generates a GUI to be shown on the display under the control of the controller 150. The GUI generated by the GUI generator 160 is a form of display information, which is shown on the display so that the user can interface with the DTV. The GUI comprises a means for receiving user commands, such as a menu, and a means for informing a user of the operational state of the DTV 100 or information useful to the user. The information useful to the user comprises stock information.

The GUI generated by the GUI generator 160 is transferred to the video processor 129, and is then added to video to be shown on the display. Specifically, the GUI generator 160 generates a GUI containing information transferred from the controller 150 and transfers the GUI to the video processor 129.

The broadcast output unit 130 outputs video and audio corresponding to the video signal and the audio signal output from the broadcast processor 120, and thereby provides a user with the video and audio. The broadcast output unit 130 comprises an audio output unit 131 and a video output unit 135.

The audio output unit 131 may output the audio signal transmitted from the audio processor 125 through the speaker connected thereto, or may output the audio signal to an output display (for example, an external TV) which is connected to an external output terminal.

The video output unit 135 may output the video signal transmitted from the video processor 129 through the display connected thereto, or may output the video signal to an output display (for example, an external TV) which is connected to an external output terminal.

The Internet interface 170 is connected to the RSS server 200 via the Internet 300 so that mutual communication may be performed therebetween.

The user command receiver 140 transfers user commands received from a remote controller to the controller 150. The controller 150 controls the entire operation of the DTV 100 in response to the user commands received from the user command receiver 140. Specifically, the controller 150 controls the broadcast receiver 110, the broadcast processor 120 and the broadcast output unit 130, so that a broadcast can be received in response to the user command and displayed on a screen.

The controller 150 also requests the stock information from the RSS server 200, receives the stock information via the Internet interface 170, and stores the received stock information in the storage unit 180. In order to request the stock information from the RSS server 200 via the Internet 300, the controller 150 may function as a web client. The request and receipt of stock information by the controller 150 may follow the RSS protocol.

The controller 150 controls the GUI generator 160 to generate display information using the received stock information and to provide a user with the generated display information.

Hereinafter, processes by which the controller 150 displays information generated using stock information received from the RSS server 200 using the RSS protocol on a screen, thereby providing it to a user, will be described in detail.

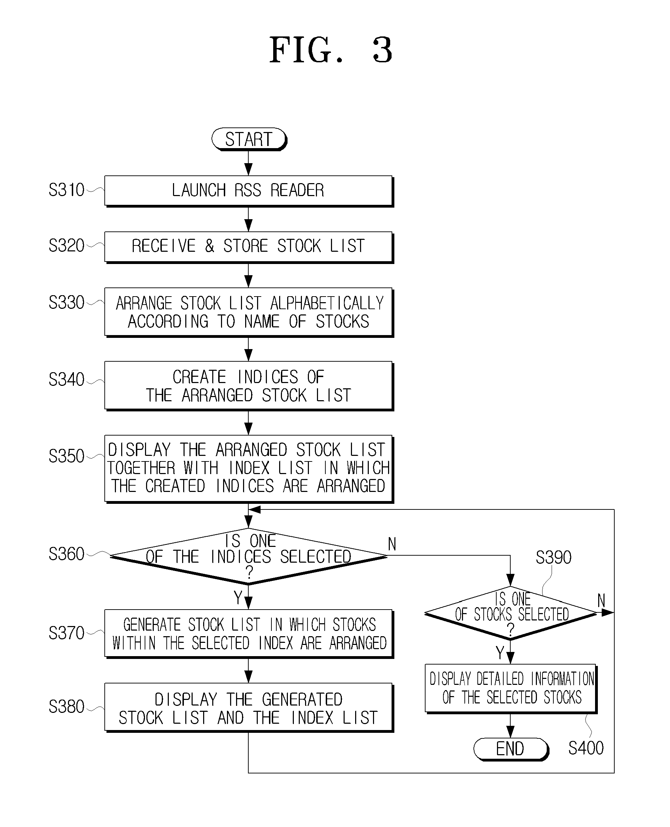

FIG. 3 is a flowchart explaining a method for providing stock information, in which a stock list is provided together with indices of the stock list, according to an exemplary embodiment of the present invention.

As shown in FIG. 3, the controller 150 of the DTV 100 launches an RSS reader (S310). The RSS reader is a program used to perform operations S320 to S400. In more detail, the RSS reader is a program used to receive stock information, arrange the received stock information and generate a stock list and indices. Additionally, the RSS reader may display the indices and stock list on a screen, and provide detailed information on stocks selected by a user.

The controller 150, which launches the RSS reader receives the stock list from the RSS server 200 through the Internet interface 170 and stores the received stock list (S320). Here, the stock list refers to a list in which stocks are arranged.

Specifically, in operation S320, the controller 150 transmits a stock list request message to a uniform resource locator (URL) of the RSS server 200, and receives the stock list as a response to the request message.

The stock list may be contained in the stock information. In this situation, the controller 150 may read the stock list from the stock information received from the RSS server 200 and stored in the storage unit 180, and may acquire the stock list.

The controller 150 arranges the stock list stored in the storage unit 180 alphabetically according to the name of the stocks (S330). For example, if stocks are listed in Korean, the controller 150 may arrange the stocks alphabetically following the Korean alphabet, and if stocks are listed in English, the controller 150 may arrange the stocks alphabetically following the Roman alphabet. Alternatively, if stocks listed in Korean are mixed with stocks listed in English, the controller 150 may arrange the stocks in Korean in Korean alphabetic order, and may then arrange the stocks in English in English alphabetic order.

The controller 150 creates indices of the stock list arranged in operation S330 (S340). For example, if stocks are listed in English, the controller 150 may sort the name of stocks from "A" to "Z", to create indices in operation S340. Specifically, the controller 150 may classify letters from "A" to "Z" into five groups, and create five indices, namely, "A-E", "F-J", "K-O", "P-T" and "U-Z".

The controller 150 then controls the GUI generator 160 to generate a GUI showing the stock list arranged in operation S330 together with an index list in which the indices created in operation S340 are arranged, and to display the generated GUI on the screen (S350).

If a user selects one of the indices arranged in the index list (S360-Y), the controller 150 may generate a stock list in which stocks in the selected index are arranged (S370).

The controller 150 also controls the GUI generator 160 so that a GUI which presents the stock list generated in operation S370 and the index list of the indices created in operation S340 may be generated and the generated GUI may be displayed on the screen (S380). In this situation, the index list remains unchanged, but the stock list changes on the GUI shown on the screen. Accordingly, a user may understand that the GUI shown in operation S380 contains only stock list changes.

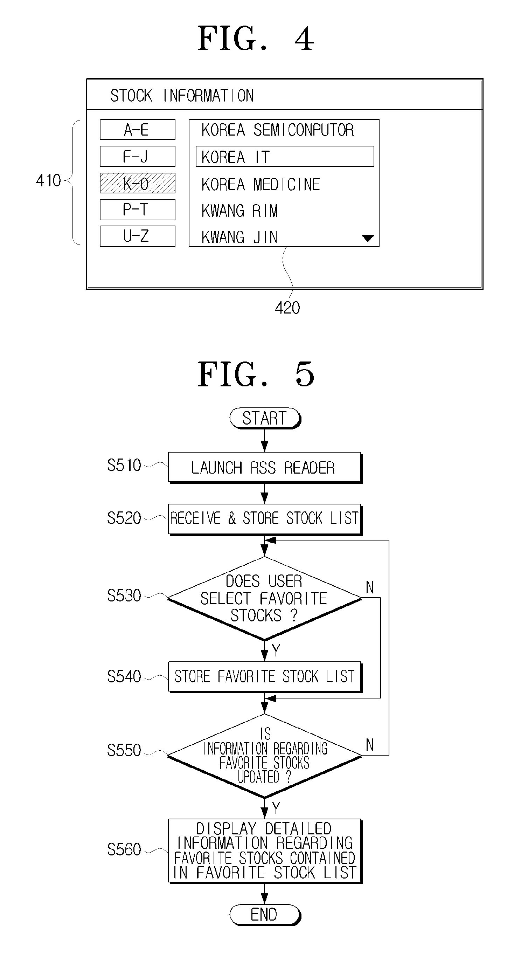

FIG. 4 shows an example of the GUI shown on the screen in operation S380. An index list 410 of the indices created in operation S340 is displayed on the GUI, and index "K-O" is selected by a user, as shown in FIG. 4.

Additionally, stocks in index "K-O" selected by the user are arranged alphabetically in the stock list 420 of FIG. 4. The icon "▼" appearing in the stock list may function as a mark indicating that there are other stocks within index "K-O" besides the stocks currently displayed, and clicking on the icon may cause other stocks to be displayed on the screen.

The user may select one of the stocks arranged in the stock list. If the user selects one of the stocks arranged in the stock list (S390-Y), the controller 150 may control the GUI generator 160 to generate a GUI showing detailed information on the selected stocks and to display the generated GUI on the screen (S400).

During operation S400, the controller 150 may read the detailed information on the stocks selected in operation S390 from the stock information stored in the storage unit 180, and may use the read detailed information.

The process for providing the stock list together with the indices of the stock list was described above in detail, according to the exemplary embodiment of the present invention.

FIG. 5 is a flowchart explaining a method for providing favorite stock information, according to another exemplary embodiment of the present invention.

In FIG. 5, the controller 150 of the DTV 100 launches the RSS reader (S510). The RSS reader is a program used to perform operations S520 to S560. In more detail, the RSS reader is a program used to generate a favorite stock list, and to display information regarding favorite stocks on the screen when the information regarding favorite stocks is updated.

The controller 150 receives the stock list from the RSS server 200 through the Internet interface 170 and stores the received stock list (S520). Here, the stock list refers to a list in which stocks are arranged.

Specifically, in operation S520, the controller 150 transmits a stock list request message to a URL of the RSS server 200, and receives the stock list as a response to the request message.

The stock list may be contained in the stock information. In this situation, the controller 150 may read the stock list from the stock information, which is received from the RSS server 200 and stored in the storage unit 180, to acquire the stock list.

The controller 150 may control the GUI generator 160 to display the stock list on the screen, so the user may select the favorite stocks from the stock list displayed on the screen.

If the user selects favorite stocks (S530-Y), the controller 150 may generate a favorite stock list containing stocks selected by the user, and may store the generated list on the storage unit 180 (S540).

The controller 150 then checks whether detailed information regarding the favorite stocks arranged in the favorite stock list is updated (S550). In more detail, during operation S550, if detailed information regarding the favorite stocks is received from the RSS server 200 through the Internet interface 170, the controller 150 may determine whether the received information corresponds with information that has previously been received.

If it is determined that detailed information regarding the favorite stocks are updated (S550-Y), the controller 150 may control the GUI generator 160 to generate a GUI showing the detailed information regarding the favorite stocks in the favorite stock list, and to display the generated GUI on the screen (S560).

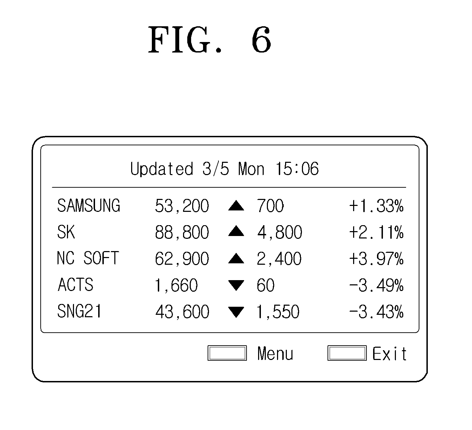

FIG. 6 shows an example of the GUI shown on the screen in operation S560. Favorite stocks, for example SAMSUNG, SK, NC SOFT ACTS and SNG21, are arranged on the GUI of FIG. 6, and detailed information regarding the favorite stocks, such as the stock price, price change and percentage change, are displayed on the right of the GUI of FIG. 6.

The detailed information regarding the favorite stocks received from the RSS server 200 through the Internet interface 170 comprise information on the change in value, such as the price change and percentage change regarding the favorite stocks. If the detailed information regarding the favorite stocks are displayed in operation S560, the controller 150 may determine the rise or fall in value of the favorite stocks, and the maximum value and minimum value of the favorite stocks, and may control the GUI generator 160 to display such detailed information using icons on the GUI.

Specifically, the controller 150 may control the GUI generator 160 so that favorite stocks which have risen to their maximum value or fallen to their minimum value may be displayed differently from favorite stocks which are not at their maximum or minimum value.

For example, favorite stocks which have risen to their maximum value and favorite stocks which have fallen to their minimum value may be displayed as "↑" and "↓", respectively; and favorite stocks which have risen to a value less than their maximum value and favorite stocks which have fallen to a value greater than their minimum value may be displayed as "▲" and "▼", respectively. In more detail, in a situation in which the maximum and minimum values are ±15%, if favorite stocks rise in value by 10%, the fluctuation magnitude may be displayed as "▲", and if favorite stocks fall in value by 10%, the fluctuation magnitude may be displayed as "▼". Additionally, if favorite stocks rise in value by 15%, the fluctuation magnitude may be displayed as "↑", if favorite stocks fall in value by 15%, the fluctuation magnitude may be displayed as "↓".

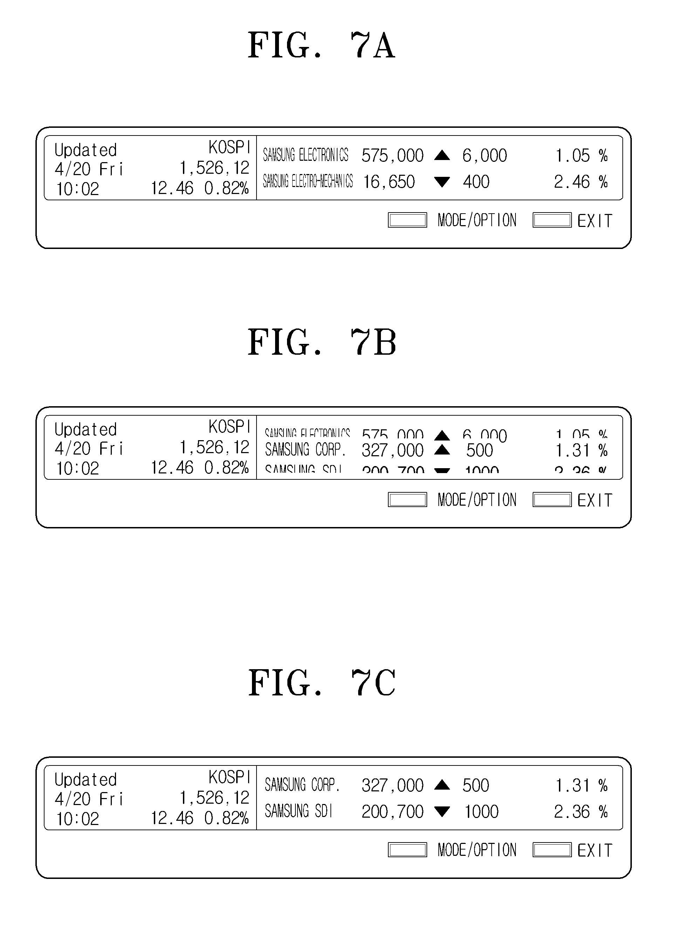

The GUI which provides detailed information regarding the favorite stocks may differ from the structure of the GUI of FIG. 6, and accordingly other examples of the GUI of FIG. 6 are shown in FIGS. 7A to 7C. The GUIs of FIGS. 7A to 7C are displayed in such a manner that information on the favorite stocks moves upwards over the screen, and may be disposed at the top or bottom of the screen.

The process for displaying detailed information regarding favorite stocks selected by the user on the single screen was described above in detail, according to an exemplary embodiment of the present invention.

Additionally, description is given above of the process for displaying detailed information regarding favorite stocks so that favorite stocks which have risen to their maximum value or fallen to their minimum value are distinguished from favorite stocks which are not at their maximum or minimum values, and of the process for displaying the detailed information regarding the favorite stocks so that the detailed information move upwards over the screen, according to an exemplary embodiment of the present invention.

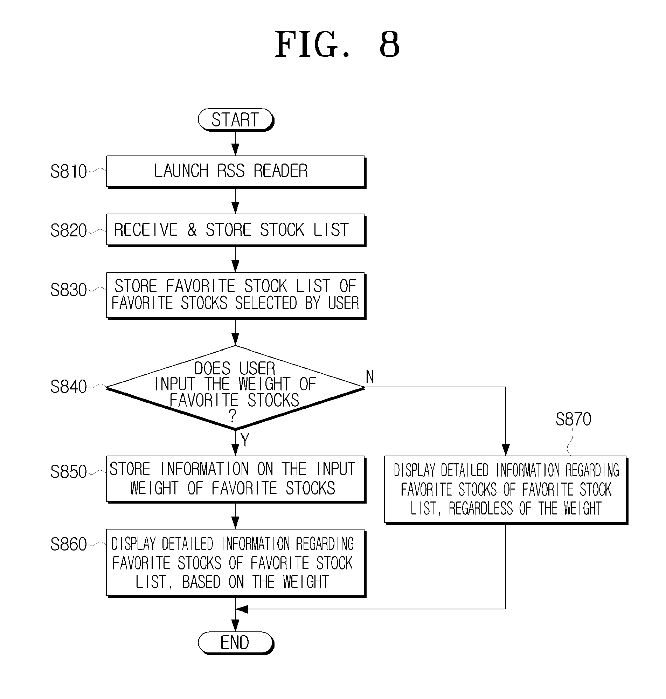

FIG. 8 is a flowchart explaining a method for providing favorite stock information, which enables a display frequency to be adjusted, according to another exemplary embodiment of the present invention.

In FIG. 8, the controller 150 of the DTV 100 launches the RSS reader (S810). The RSS reader is a program used to perform operations S820 to S870. In more detail, the RSS reader is a program used to generate a favorite stock list, and to cause the display frequency to differ according to favorite stocks when information regarding favorite stocks is displayed on the screen.

The controller 150 receives the stock list from the RSS server 200 through the Internet interface 170 and stores the received stock list (S820). Here, the stock list refers to a list in which stocks are arranged.

Specifically, in operation S820, the controller 150 transmits a stock list request message to a URL of the RSS server 200, and receives the stock list as a response to the request message.

The stock list may be contained in the stock information. In this situation, the controller 150 may read the stock list from the stock information, which is received from the RSS server 200 and stored in the storage unit 180, to acquire the stock list

The controller 150 may control the GUI generator 160 to display the stock list on the screen, so the user may select the favorite stocks from the stock list displayed on the screen. The controller 150 generates a favorite stock list containing stocks selected by the user, and stores the generated list on the storage unit 180 (S830).

The user may also input a weight for favorite stocks. If the user inputs a weight for favorite stocks (S840-Y), the controller 150 may store information on the input weight for the favorite stocks in the storage unit 180 (S850).

The controller 150 controls information regarding the favorite stocks in the favorite stock list to be displayed based on the input weight stored in operation S850 (S860). Specifically, during operation S860, the controller 150 may cause detailed information regarding favorite stocks with a high weight to be displayed more frequently, and may cause detailed information regarding favorite stocks with a low weight to be displayed less frequently.

For example, while favorite stock S having a weight of "5" may be displayed five times on the screen, favorite stock A having a weight of "2" may be displayed twice on the screen.

If the user inputs a weight of "0", the controller 150 may control detailed information regarding the favorite stock having a weight of "0" not to be displayed on the screen.

If the user does not input the weight of favorite stocks (S840-N), the controller 150 may control the detailed information regarding the favorite stocks in the favorite stock list to be displayed regardless of the weight (S870). Accordingly, favorite stocks may have the same display frequency of favorite stocks.

The process for providing the favorite stock information by adjusting the display frequency of favorite stocks was described above in detail with reference to the exemplary embodiment of the present invention.

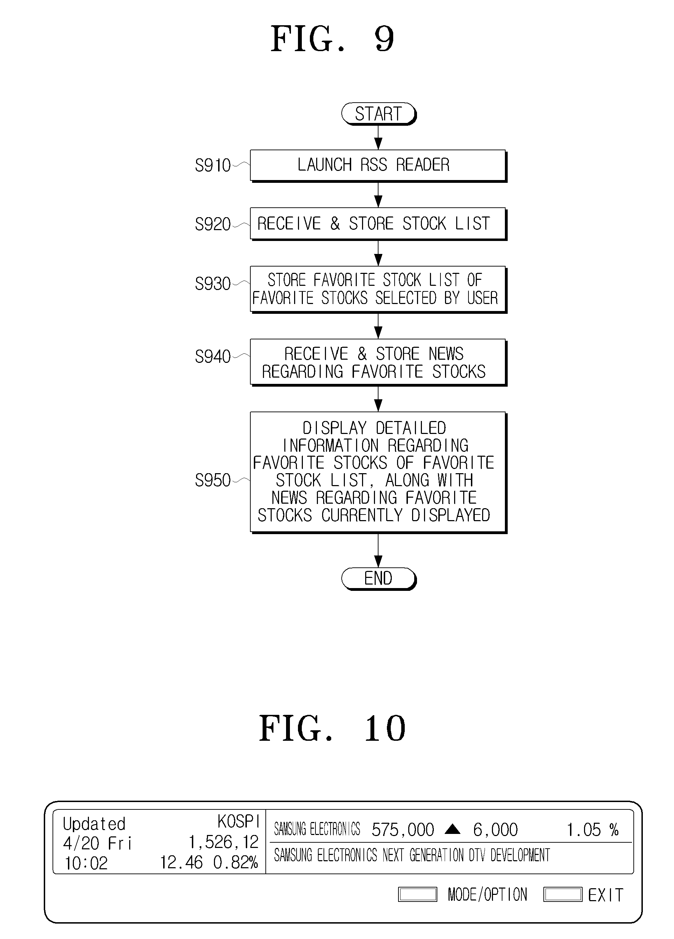

FIG. 9 is a flowchart explaining a process for providing news regarding favorite stocks together with information regarding the favorite stocks, according to another exemplary embodiment of the present invention.

In FIG. 9, the controller 150 of the DTV 100 launches the RSS reader (S910). The RSS reader is a program used to perform operations S920 to S950. In more detail, the RSS reader is a program used to generate a favorite stock list, and to provide news regarding the favorite stocks along with the information regarding the favorite stocks on the screen.

The controller 150 receives the stock list from the RSS server 200 through the Internet interface 170 and stores the received stock list (S920). Here, the stock list refers to a list in which stocks are arranged.

Specifically, in operation S920, the controller 150 transmits a stock list request message to a URL of the RSS server 200, and receives the stock list as a response to the request message.

The stock list may be contained in the stock information. In this situation, the controller 150 may read the stock list from the stock information, which is received from the RSS server 200 and stored in the storage unit 180, to acquire the stock list

The controller 150 may control the GUI generator 160 to display the stock list on the screen, so the user may select the favorite stocks from the stock list displayed on the screen. The controller 150 generates a favorite stock list with stocks selected by the user, and stores the generated list on the storage unit 180 (S930).

Additionally, the controller 150 receives news regarding the favorite stocks from an RSS news server (not shown) through the Internet interface 170, and stores the received news (S940). In more detail, the controller 150 transmits a news request message to a URL of the RSS news server, and receives the news as a response to the request message in operation S940.

Subsequently, the controller 150 controls the GUI generator 160 to display on the screen a GUI on which detailed information regarding the favorite stocks in the favorite stock list appear, along with news regarding favorite stocks currently displayed on the screen (S950).

FIG. 10 shows an example of the GUI shown on the screen in operation S950. In FIG. 10, information on the favorite stocks is displayed on the upper right of the GUI, and news regarding the favorite stocks is displayed on the bottom right of the GUI.

The process for providing news regarding favorite stocks together with the information regarding the favorite stocks was described above in detail, according to the other exemplary embodiment of the present invention.

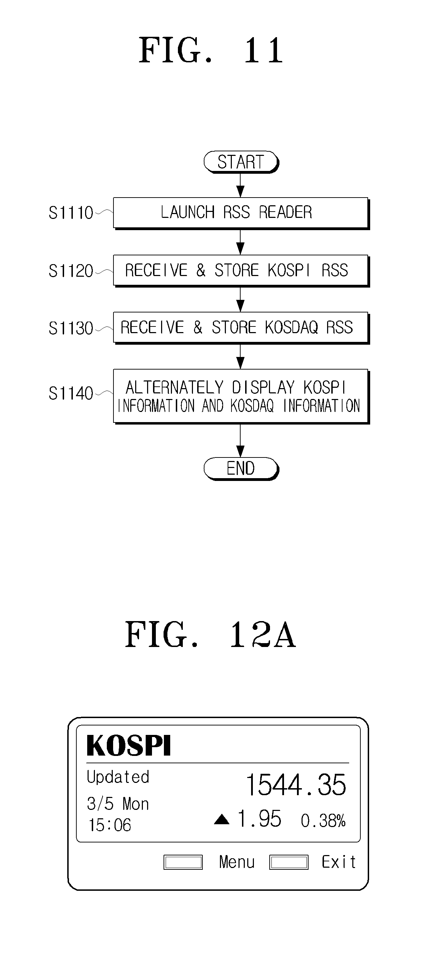

FIG. 11 is a flowchart explaining a process for providing composite stock market information, according to another exemplary embodiment of the present invention.

In FIG. 11, the controller 150 of the DTV 100 launches the RSS reader (S1110). The RSS reader is a program used to perform operations S1120 to S1140. In more detail, the RSS reader is a program used to receive RSS information on the KOSPI and the KOSDAQ, and to alternately display the received information regarding the two stock markets on the screen.

The controller 150 receives the RSS information on KOSPI from the RSS server 200 through the Internet interface 170, and stores the received information in the storage unit 180 (S 1120).

The controller 150 also receives the RSS information on KOSDAQ from the RSS server 200 through the Internet interface 170, and stores the received information in the storage unit 180 (S1130).

In operation S1120 and S1130, the controller 150 sends a request message for the RSS information on KOSPI and KOSDAQ to the URL of the RSS server 200, and receives the RSS information on KOSPI and KOSDAQ as a response to the request message.

The RSS information on KOSPI and KOSDAQ may be contained in the stock information. In this situation, the controller 150 may read the RSS information received from the RSS server 200 and stored in the storage unit 180, and may acquire the read RSS information on KOSPI and KOSDAQ.

The controller 150 controls the GUI generator 160 so that a GUI on which the RSS information on KOSPI and KOSDAQ is alternately displayed may appear on the screen (S 1140).

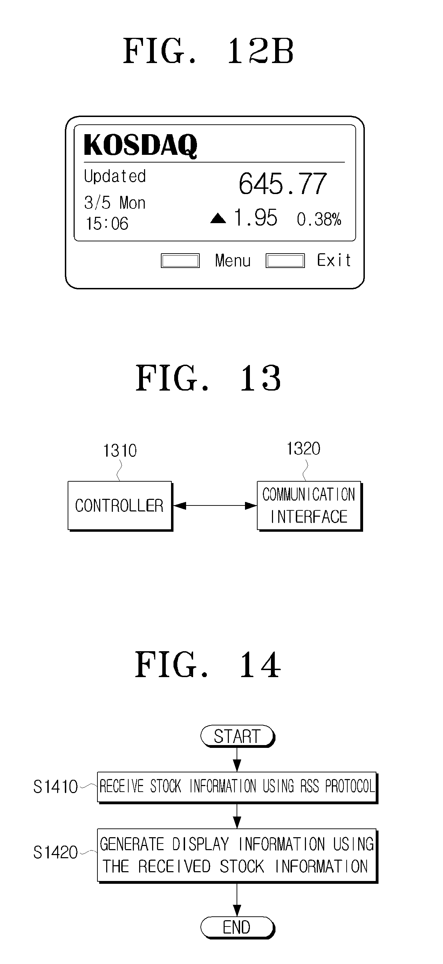

FIG. 12A shows a GUI which presents the KOSPI information, and FIG. 12B shows a GUI which presents the KOSDAQ information. In operation S1140, the KOSPI and KOSDAQ information may alternately appear on the screen.

KOSPI and KOSDAQ are merely given as examples of stock markets in order to facilitate understanding of description, and thus the present invention may be applied to other stock markets instead of KOSPI and KOSDAQ.

Additionally, in this exemplary embodiment of the present invention, the information on the stock markets is alternately displayed, that is, information on the stock markets is not displayed simultaneously. However, the present invention may be applied to a situation in which the information on the stock markets is displayed simultaneously, that is, in which information on two or more stock markets is displayed on a single screen at once.

The GUI which provides the information on the stock markets may be reduced in size so as not to interfere with viewing the screen, and may be displayed on a portion of the screen.

The process for providing composite stock market information was described above in detail, according to another exemplary embodiment of the present invention.

The stock information is provided following the RSS protocol in this exemplary embodiment of the present invention, but may be provided according to other protocols instead of the RSS protocol.

Additionally, the stock information is received through the Internet 300 in this exemplary embodiment of the present invention, but the present invention is not limited to the Internet 300, as a medium which receives the stock information. Accordingly, the stock information may be received through networks other than the Internet 300, or through the same medium as the medium by which the broadcast information is received.

Although a broadcast receiving apparatus to which the present invention is applicable is constituted by the DTV 100 in order to facilitate understanding of the present invention, the present invention is applicable to other broadcast receiving apparatuses instead of the DTV 100. Besides the DTV 100, broadcast receiving apparatuses may be implemented as a set-top box (STB) or a digital multimedia broadcasting (DMB), or any of various portable devices, such as a mobile phone, a navigation device or a personal multimedia player (PMP), having a broadcast receiving function. In addition, other video apparatuses (namely, apparatuses without the broadcast receiving function), excluding broadcast receiving apparatuses, may also be used instead of the DTV 100.

Hereinafter, another exemplary embodiment of the present invention will be described in detail with reference to FIGS. 13 and 14.

As shown in FIG. 13, a broadcast receiving apparatus according to another exemplary embodiment of the present invention comprises a controller 1310 and a communication interface 1320.

The communication interface 1320 receives stock information according to the RSS protocol. The controller 1310 controls display information to be generated using the stock information received via the communication interface 1320.

In a method for providing stock information in FIG. 14, the broadcast receiving apparatus receives stock information according to the RSS protocol (S1410). The broadcast receiving apparatus then generates display information using the received stock information (S 1420).

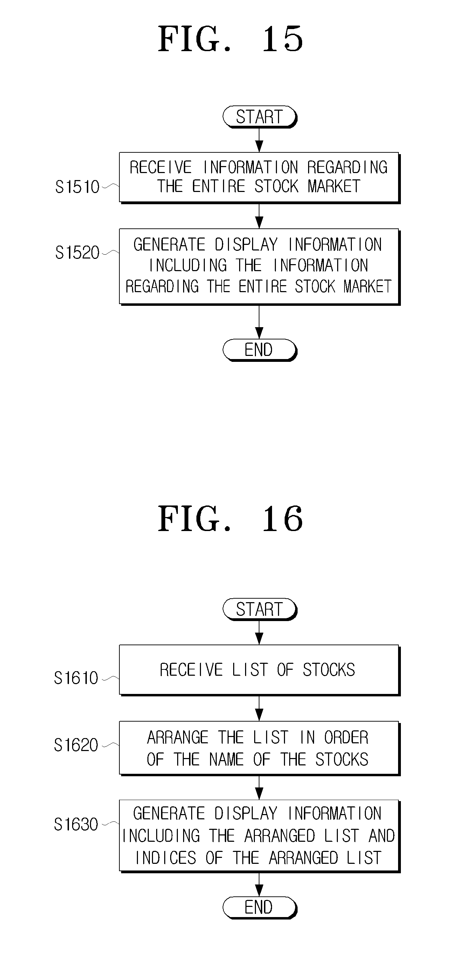

In a method for providing stock information in FIG. 15, a video apparatus receives composite stock market information (S1510). The video apparatus then generates display information including the composite stock market information (S 1520).

Alternatively, according to a method for providing stock information in FIG. 16, the video apparatus receives a list of stocks (S1610). Next, the video apparatus arranges the list alphabetically according to the name of the stocks (S1620). The video apparatus then generates display information including the arranged list and indices of the arranged list (S1630).

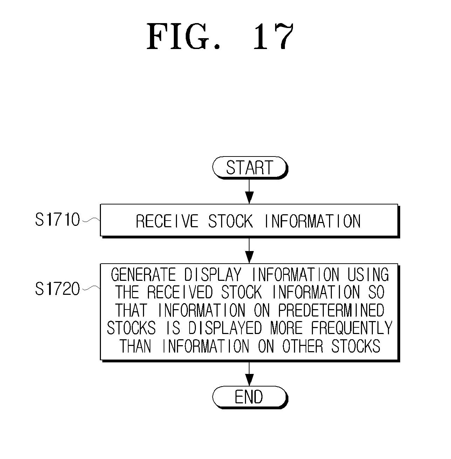

Additionally, according to a method for providing stock information in FIG. 17, the video apparatus receives stock information (S 1710). The video apparatus then generates display information using the received stock information so that information on predetermined stocks is displayed more frequently than information on other stocks (S 1720).

Therefore, it is possible to provide a user with information generated using the stock information on the screen.

As described above, according to the exemplary embodiment of the present invention, information on stock markets is received according to the RSS protocol, and a user is then provided with the information on stock markets. Additionally, it is possible to provide the user with composite stock market information, including a stock list and indices of the list, as information on stock markets. Furthermore, the display frequency of the received information may be different from the display frequency of information on other stock markets.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for providing stock information, the method comprising:
receiving stock information using a Really Simple Syndication (RSS) protocol; and
generating display information based on the received stock information.

2. The method as claimed in claim 1, wherein the receiving and generating are performed by a broadcast receiving apparatus, which receives a broadcast and provides a user with the received broadcast.

3. The method as claimed in claim 2, wherein a medium by which the broadcast receiving apparatus receives the broadcast differs from a medium by which the broadcast receiving apparatus receives the stock information.

4. The method as claimed in claim 2 or claim 3, wherein
the receiving comprises the broadcast receiving apparatus receiving the stock information via the Internet, and
the broadcast receiving apparatus functions as a web client with respect to a web server which provides the stock information.

5. The method as claimed in any preceding claim, wherein
the stock information comprises composite stock market information, and
the generating comprises generating display information including the composite stock market information.

6. The method as claimed in claim 5, wherein
the composite stock market information includes information corresponding to a plurality of stock markets, and
the generated display information comprises information to display composite stock market information corresponding to the plurality of stock markets alternately or simultaneously.

7. The method as claimed in any preceding claim, wherein the stock information comprises a list of stocks, and
the generating comprises:
arranging the list alphabetically according to the names of the stocks in the list; and
generating display information including the arranged list and indices of the arranged list.

8. The method as claimed in claim 7, further comprising, if one of the indices contained in the display information is selected, generating display information showing a list in which stocks within the selected index are arranged.

9. The method as claimed in any preceding claim, wherein the generating comprises generating display information using the received stock information, so that a display frequency of information on a predetermined stock is different from a display frequency of information on other stocks.

10. The method as claimed in claim 9, wherein the predetermined stock is a stock previously selected by the user.

11. The method as claimed in claim 9, wherein the display frequency for the information on the predetermined stock is adjustable by the user.

12. A broadcast receiving apparatus comprising:
a communication interface (170) which receives stock information using a Really Simple Syndication (RSS) protocol; and
a controller (156) which controls display information to be generated using the stock information received by the communication interface.

13. The broadcast receiving apparatus as claimed in claim 12, wherein the communication interface (170) receives the stock information via the Internet, and
the controller (150) functions as a web client with respect to a web server which provides the stock information.

14. The broadcast receiving apparatus as claimed in claim 12 or claim 13, wherein the stock information comprises composite stock market information, and
the controller (150) causes display information including the composite stock market information to be generated.

15. The broadcast receiving apparatus as claimed in claim 14, wherein the composite stock market information comprises information corresponding to a plurality of stock markets, and
the display information includes the information, corresponding to the plurality of stock markets, displayed alternately or simultaneously.

16. The broadcast receiving apparatus as claimed in any one of claims 12-15, wherein the stock information comprises a list of stocks, and
the controller (150) arranges the list alphabetically according to the names of the stocks in the list, and causes display information including the arranged list and indices of the arranged list to be generated.

17. The broadcast receiving apparatus as claimed in claim 16, wherein, if one of the indices contained in the display information is selected, the controller (150) causes display information, showing a list in which stocks within the selected index are arranged, to be generated.

18. The broadcast receiving apparatus as claimed in any one of claims 12-17, wherein the controller (150) controls display information to be generated using the received stock information, so that a display frequency of information on a predetermined stock is different from a display frequency of information on other stocks.

19. The broadcast receiving apparatus as claimed in claim 18, wherein the predetermined stock is a stock previously selected by the user.

20. The broadcast receiving apparatus as claimed in claim 18, wherein the display frequency for the information on the predetermined stock is adjustable by the user.

21. A computer-readable recording medium which stores a program capable of performing:
receiving stock information using a Really Simple Syndication (RSS) protocol; and
generating display information based on the received stock information.

22. A method for providing stock information, the method comprising:
receiving composite stock market information; and
generating display information including the received composite stock market information.

23. A method for providing stock information, the method comprising:
receiving a list of stocks;
arranging the list alphabetically according to the names of the stocks in the list; and
generating display information including the arranged list and indices of the arranged list.
